# EUROPÄISCHE PATENTANMELDUNG

(11) **EP 1 903 386 A1**
(43) Veröffentlichungstag der Anmeldung: **26.03.2008**
(21) Anmeldenummer: 07018625.9
(22) Anmeldetag: 21.09.2007
(51) Int. Cl.: G03B 17/02, G03B 17/18, H04N 1/00, H04N 5/232

(54) **Fotokamera und Bedienungsverfahren für eine Fotokamera**

(30) Priorität: 21.09.2006 DE 102006045601
(71) Anmelder: JENOPTIK Laser, Optik, Systeme GmbH, 07745 Jena (DE)
(72) Erfinder: Klippstein, Thomas, 07749 Jena (DE); Eigenheer, Rolf, 8462 Rheinau (CH); Gfeller, Karl, 8246 Langwiesen (CH)
(74) Vertreter: Geyer, Fehners & Partner

(57) **Zusammenfassung**

Es wird bereitgestellt eine Fotokamera mit einem Gehäuse (2), einem an einer ersten Seitenwand (6) des Gehäuses (2) positionierten Handgriff (7) und einer Bedienungseinheit, die an einer der ersten Seitenwand (6) gegenüberliegenden Seitenwand (11) des Gehäuses (2) ein Einstellmodul (12) mit mehreren Wahlschaltern (W3, W4, W6), die jeweils mechanisch in verschiedene Stellungen gebracht werden können, um jeweils einen dem entsprechenden Wahlschalter zugeordneten Aufnahmeparameter einzustellen, und am Handgriff (7) einen Auslösemechanismus (T1), eine Anzeige (10) sowie ein erstes Einstellelement (W1, W2) aufweist,
wobei jeder Wahlschalter (W3, W4, W6) des Einstellmoduls (12) in eine zusätzliche Stellung gebracht werden kann, bei der für den Aufnahmeparameter des Wahlschalters (W3, W4, W6) in einem Auswahlmodus weitere einstellbare Werte in der Anzeige (10) dargestellt werden, die mittels des ersten Einstellelements (W1, W2) auswählbar sind.

## Beschreibung

Die vorliegende Erfindung betrifft eine Fotokamera sowie ein Bedienungsverfahren für eine Fotokamera.

Aufgabe der Erfindung ist es, eine Fotokamera bereitzustellen, die leicht zu bedienen ist. Ferner soll ein entsprechendes Bedienungsverfahren bereitgestellt werden.

Die Aufgabe wird gelöst durch eine Fotokamera mit einem Gehäuse, einem an einer ersten Seitenwand des Gehäuses positionierten Handgriff und einer Bedienungseinheit, die an einer der ersten Seitenwand gegenüberliegenden Seitenwand des Gehäuses ein Einstellmodul mit mehreren Wahlschaltern, die jeweils mechanisch in verschiedene Stellungen gebracht werden können, um jeweils einen dem entsprechenden Wahlschalter zugeordneten Aufnahmeparameter einzustellen, und am Handgriff einen Auslösemechanismus, eine Anzeige sowie ein erstes Einstellelement aufweist, wobei jeder Wahlschalter des Einstellmoduls in eine zusätzliche Stellung gebracht werden kann, bei der für den Aufnahmeparameter des Wahlschalters in einem Auswahlmodus weitere einstellbare Werte in der Anzeige dargestellt werden, die mittels des ersten Einstellelements auswählbar sind.

Die erfindungsgemäße Fotokamera weist den Vorteil auf, daß die Stellung der Wahlschalter schnell abgelesen werden kann, so daß der Bediener immer weiß, welche Einstellungen er ausgewählt hat. Insbesondere im professionellen Fotobereich wird dies häufig gewünscht, da die Fotografen diese Art der Bedienung der Fotokamera gewöhnt sind. Wenn einer der Wahlschalter in der zusätzlichen Stellung steht, können in vorteilhafter Weise weitere Werte für den entsprechenden Aufnahmeparameter eingestellt werden. Damit ist es möglich, Feineinstellungen oder Spezialfunktionen für die entsprechenden Aufnahmeparameter vorzusehen.

Der Aufnahmeparameter kann z.B. die Art und Weise der Auslösung (Auslösemodus), die Art und Weise der Belichtung (Belichtungsmodus) oder die Art und Weise der Fokussierung (Autofokusmodus) sein.

Die erfindungsgemäße Kamera kann somit einerseits in einem Normalmodus betrieben werden, in dem die Aufnahmeparameter über die Wahlschalter direkt eingestellt und auch direkt abgelesen werden können.

Ferner kann die Kamera in einem Auswahlmodus betrieben werden, in dem weitere Einstellungen für die Aufnahmeparameter durchgeführt werden können. Dabei handelt es sich z.B. um Aufnahmeparameterwerte, die nicht häufig benötigt werden.

Die Fotokamera kann als einäugige Spiegelreflexkamera und ferner als Mittelformatkamera ausgebildet sein.

Insbesondere kann das Einstellmodul für jeden Wahlschalter eine Taste aufweisen, die bei Betätigung, wenn der zugeordnete Wahlschalter in der zusätzlichen Stellung steht, die Kamera in den Auswahlmodus schalten.

Damit läßt sich eine leichte Bedienung realisieren und insbesondere ist es möglich, in der Anzeige immer gleich die weiteren Werte anzuzeigen, die für den jeweiligen Aufnahmeparameter möglich sind. Bei einer menügeführten Auswahl kann somit immer das richtige Untermenü sofort dargestellt werden, wodurch die Bedienung leicht und schnell möglich ist.

Dem ersten Einstellelement kann ein Aufnahmeparameter zugeordnet sein, der mittels dem ersten Einstellelement einstellbar ist, wenn die Kamera nicht im Auswahlmodus ist. Dabei kann es sich z.B. um die Blende und/oder Belichtungszeit handeln. Mit dem ersten Einstellelement ist somit eine Vorwahl von Blende und/oder Belichtungszeit möglich.

Insbesondere kann bei der Kamera im Auswahlmodus die Auswahl der Aufnahmeparameter der Wahlschalter mittels dem ersten Einstellelement menügeführt durchführbar sein. Damit lassen sich eine Vielzahl von Funktionen in einfacher Art und Weise in die Kamera integrieren und dann über die Menüführung leicht auswählen.

Bei der Kamera kann das Einstellelement als Wahlrad ausgebildet sein. Dies ist besonders vorteilhaft, um die einzelnen Menüpunkte im Auswahlmodus durchblättern zu können.

Die Kamera kann am Handgriff ein zweites Einstellelement zur Auswahl im Auswahlmodus aufweisen und das zweite Einstellelement kann insbesondere als Wahlrad ausgebildet sein. Im Normalmodus kann dem zweiten Einstellelement ein weiterer Aufnahmeparameter zugeordnet sein. So ist es z.B. möglich, mit dem ersten Wahlrad die Blende und dem zweiten Wahlrad die Belichtungszeit im Normalmodus einzustellen.

Zumindest einer der Wahlschalter kann als Drehschalter ausgebildet sein. Die unterschiedlichen Stellungen werden somit durch Drehung des Schalters erreicht. Insbesondere kann die dem Drehschalter zugeordnete Taste vom Drehschalter umgeben sein. Damit ist eine örtliche Zuordnung bei gleichzeitig äußerst kompakter Ausbildung des Drehschalters und der Taste möglich.

Zumindest einer der Wahlschalter kann auch als Schiebeschalter ausgebildet sein, so daß die unterschiedlichen Stellungen durch Schieben des Schalters eingestellt werden können.

Der Handgriff kann mit einem Drehmechanismus ausgestattet sein. So kann er z.B. drehbar am Gehäuse befestigt sein. Damit wird die Bedienung der Kamera nochmals erleichtert.

Die Anzeige kann bei der Kamera bevorzugt auf der Oberseite des Handgriffes angeordnet sein. Insbesondere kann die Anzeige gegenüber der Oberseite des Handgriffes gekippt sein, so daß die Ablesbarkeit verbessert ist. Das erste Einstellelement kann auf der Oberseite oder Unterseite des Handgriffes angeordnet sein. Wenn ein zweites Einstellelement vorgesehen ist, ist dieses bevorzugt auf der Unter- bzw. Oberseite angeordnet, so daß bei zwei Einstellelementen jeweils ein Einstellelement auf der Oberseite und ein Einstellelement auf der Unterseite des Handgriffs angeordnet ist. Die Anordnung kann in diesem Fall so gewählt werden, daß das auf der Oberseite angeordnete Einstellelement mit dem Daumen der den Handgriff haltenden Hand und das auf der Unterseite angeordnete Einstellelement mit dem Zeigefinger der den Handgriff haltenden Hand bedient werden kann.

Auf der Oberseite des Handgriffs können noch weitere Tasten angeordnet sein. Insbesondere können sogenannte Soft-Key-Tasten vorgesehen sein, die bei menügeführter Auswahl des Aufnahmeparameters verwendet werden und denen in Abhängigkeit des dargestellten Menüs unterschiedliche Funktionen zugewiesen werden.

Der Auslösemechanismus bzw. die Auslösetaste ist bevorzugt auf der Unterseite des Handgriffs angeordnet. Sie kann jedoch auch, wenn dies gewünscht ist, auf der Oberseite des Handgriffs positioniert werden.

Die beschriebene Bedienungseinheit wird auch als solche für eine Mittelformatkamera bereitgestellt.

Es wird ferner ein Bedienungsverfahren für eine Fotokamera (z.B. eine einäugige Spiegelreflexkamera, insbesondere eine Mittelformatkamera) mit mehreren Wahlschaltern bereitgestellt, die jeweils mechanisch in verschiedene Stellungen gebracht werden können, um in einem Normalmodus jeweils einen der dem entsprechenden Wahlschalter zugeordneten Aufnahmeparameter einzustellen, wobei jeder Wahlschalter in eine zusätzliche Stellung gebracht werden kann, bei der für den Aufnahmeparameter des Wahlschalters in einem Auswahlmodus weitere einstellbare Werte in einer Anzeige der Kamera dargestellt werden, die auswählbar sind.

Das Bedienungsverfahren ist somit ein Zwei-Ebenen-Verfahren, bei dem in einer ersten Ebene (Normalmodus) mittels mechanischer Wahlschalter die Aufnahmeparameter eingestellt werden, und in einer zweiten Ebene, dem Auswahlmodus, weitere Einstellmöglichkeiten für die Aufnahmeparameter bereitgestellt und ausgewählt werden können. Dieses Bedienungskonzept führt zu einer intuitiv bedienbaren Kamera. So können die häufigst benötigten Aufnahmeparameterwerte im Normalmodus mittels der Wahlschalter eingestellt werden. Für nicht so häufig benötigte Aufnahmeparameterwerte kann die Auswahl dann im Auswahlmodus erfolgen.

Das erfindungsgemäße Bedienungsverfahren kann insbesondere eine Menüführung mit mehreren Menüebenen für die Auswahl des Aufnahmeparameters im Auswahlmodus bereitstellen.

Ferner kann die Kamera noch so ausgebildet sein, daß die weiteren einstellbaren Werte im Auswahlmodus nachträglich erweitert werden können. Dies kann z.B. durch ein Firmware-Update erfolgen. Somit kann die Kamera laufend auf dem neuesten Stand gehalten werden.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine Seitenansicht einer ersten Ausführungsform der erfindungsgemäßen Kamera;
- Fig. 2: eine Vorderansicht einer ersten Ausführungsform der erfindungsgemäßen Kamera;
- Fig. 3: eine Draufsicht einer zweiten Ausführungsform der erfindungsgemäßen Kamera;
- Fig. 4: eine schematische Darstellung zur Erläuterung der Einstellmöglichkeiten mittels dem ersten Wahlschalter W3;
- Fig. 5: eine schematische Darstellung zur Erläuterung der Einstellmöglichkeiten mittels dem zweiten Wahlschalter W4, und
- Fig. 6: eine schematische Darstellung zur Erläuterung der Einstellmöglichkeiten mittels dem dritten Wahlschalter W6.

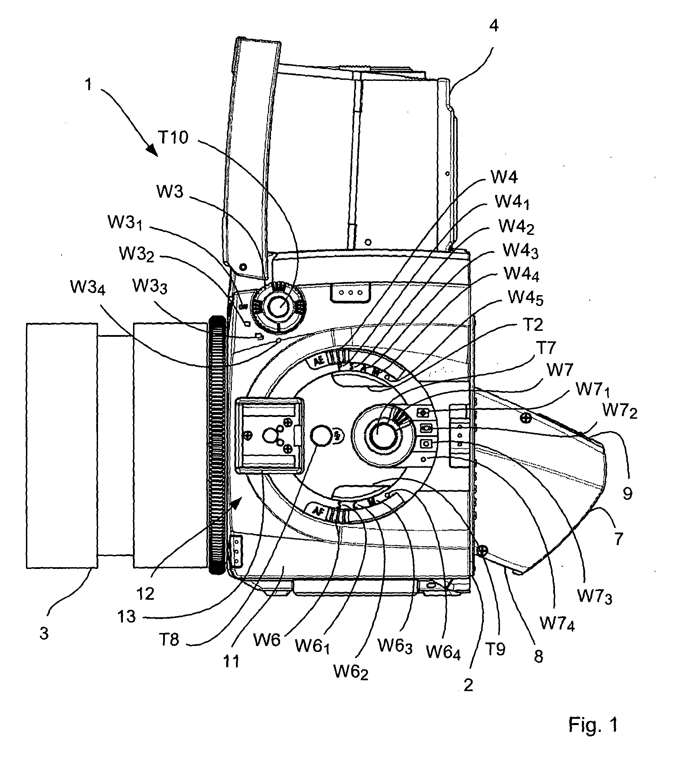

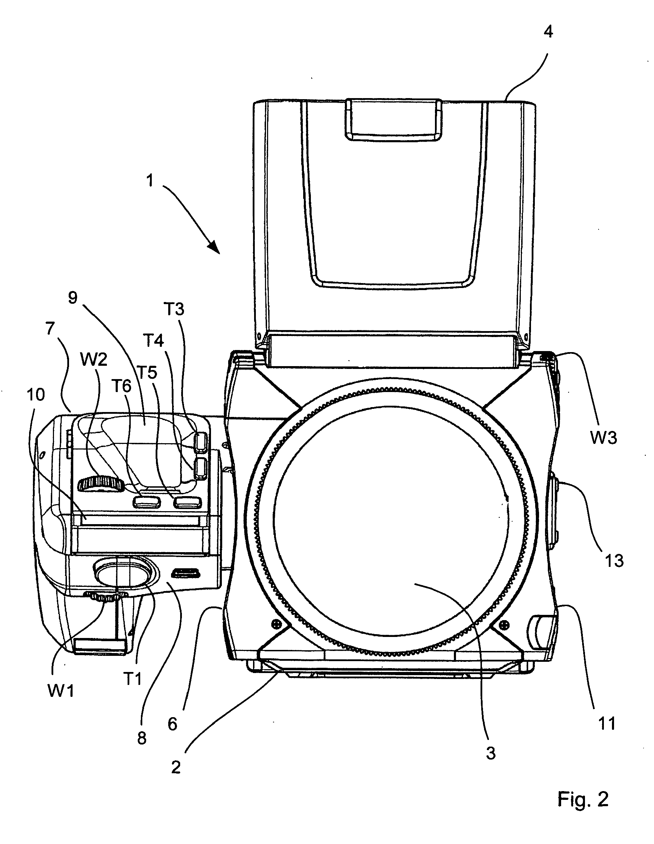

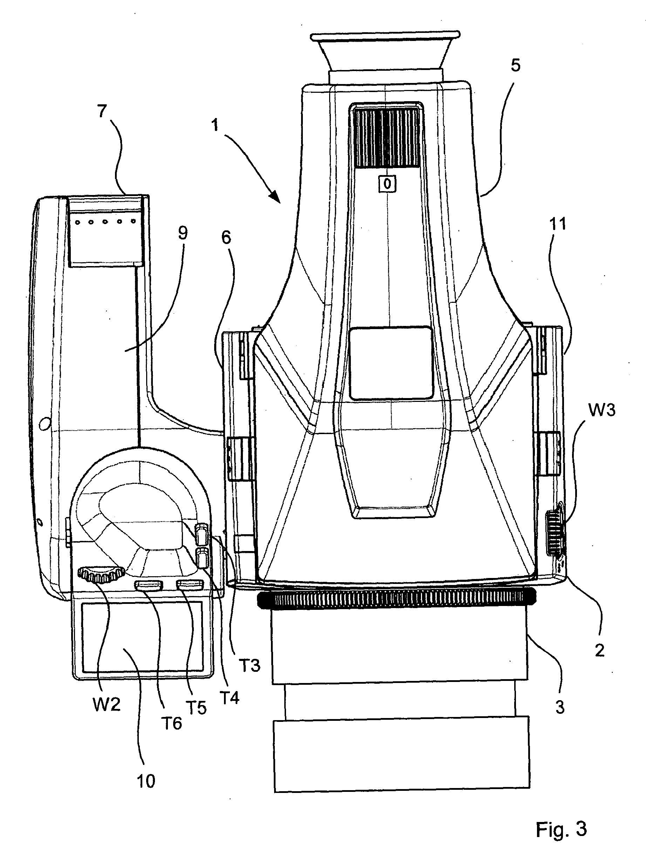

Bei der in den Figuren 1 bis 3 gezeigten Ausführungsformen umfaßt die erfindungsgemäße Kamera 1 ein Gehäuse 2 mit einem Objektiv 3. In der Seitenansicht von Fig. 1 und der Frontansicht von Fig. 2 ist die Kamera jeweils mit einem Lichtschachtsucher 4 (Einblick von oben) dargestellt, wohingegen in der Draufsicht von Fig. 3 statt des Lichtschachtsuchers 4 die Kamera 1 mit einem Okularsucher 5 (Einblick von hinten) dargestellt ist. Ansonsten unterscheiden sich die Ausführungsformen von Fig. 1 und 2 einerseits und Fig. 3 andererseits nicht.

An einer ersten Seitenwand 6 (hier die rechte Seitenwand) des Kameragehäuses 2 ist drehbar ein Handgriff 7 befestigt. Wie aus Fig. 2 ersichtlich ist, sind auf der Rückseite 8 des Handgriffes 7 eine Auslösetaste T1 sowie ein erstes Wahlrad W1 angeordnet.

Wie insbesondere aus Fig. 2 und 3 ersichtlich ist, sind auf der Vorderseite 9 des Handgriffes 7 ein Anzeigebildschirm 10, der gegenüber der Vorderseite 9 leicht nach oben gekippt ist, und ein zweites Wahlrad W2 angeordnet. Ferner sind auf der Vorderseite 9 noch vier Tasten T3, T4, T5 und T6 vorgesehen.

Auf der der ersten Seitenwand 6 gegenüberliegenden zweiten Seitenwand 11 (hier linke Seitenwand) des Gehäuses 2 ist ein Einstellmodul 12 angeordnet, das einen ersten Wahlschalter W3 mit zugeordneter erster Taste T10, einen zweiten Wahlschalter W4 mit zugeordneter zweiter Taste T2 sowie einen dritten Wahlschalter W6 mit zugeordneter dritter Taste T9 aufweist. Die Wahlschalter W3, W4 und W6 dienen jeweils zur Einstellung eines Aufnahme- bzw. Belichtungsparameters. So kann mit dem ersten Wahlschalter W3 der Auslösemodus, mit dem zweiten Wahlschalter W4 der Belichtungsmodus und mit dem dritten Wahlschalter W6 der Autofokusmodus eingestellt werden.

Die Kamera 1 weist, wie nachfolgend noch detaillierter beschrieben wird, einen Zwei-Ebenen-Bedienmodus auf, der einen Normalmodus und einen Auswahlmodus umfaßt.

Im Normalmodus können mittels der Wahlschalter W3, W4 und W6 die Aufnahmeparameter direkt eingestellt werden. Ferner kann im Normalmodus mit den Wahlrädern W1 und W2, sofern dies aufgrund der Einstellungen durch die Wahlschalter W3, W4, W6 möglich ist, die Blende (Wahlrad W1) und die Belichtungszeit (Wahlrad W2) voreingestellt werden. Die voreingestellten Werte für Blende und Belichtung werden im Normalmodus in der Anzeige 10 dargestellt. Der Normalmodus kann auch als Stufe 1 des Zwei-Ebenen-Bedienmodus bezeichnet werden. In der Stufe 1 können somit die primären Aufnahmeparameter bzw. -modi direkt an fest zugeordneten Bedienelementen (Wahlschalter W3, W4, W6) mit zugehörigen Beschriftungen eingestellt bzw. vorgewählt werden, was eine intuitive, sehr einfache und schnelle Bedienung ermöglicht. Die primären Aufnahmeparameter bzw. -modi genügen im allgemeinen für sehr viele fotografische Aufgabenstellungen - auch im professionellen Bereich.

Im Auswahlmodus können die Aufnahmeparameter der Wahlschalter W3, W4 und W6 über eine Menüführung, wobei die Menüdarstellung in der Anzeige 10 erfolgt, mittels der Wahlräder W1 und W2 ausgewählt werden. Somit dienen im Auswahlmodus die Wahlräder W1 und W2 zum Scrollen bzw. Blättern in den in der Anzeige dargestellten Menüs und Aufnahmeparameterwerte.

Der Auswahlmodus kann auch als Stufe 2 des Zwei-Ebenen-Bedienmodus bezeichnet werden. In der Stufe 2 gelangt man für spezielle Funktionen mittels Menüführung zu den erforderlichen Erweiterungen. Durch Betätigen der jeweils einem Wahlschalter (W3, W4, W6) zugeordneten Taste T10, T2, T9, wenn der Wahlschalter W3, W4, W6 in seiner Auswahlmodusstellung steht, gelangt man direkt zum entsprechenden Menüstart, was trotz umfangreicher und erweiterbarer Funktionsmöglichkeiten eine intuitive und einfache Bedienung ermöglicht. Die Bedienung erfolgt über die zwei Wahlräder W1, W2 (die im Normalmodus für Blenden- und Zeitvorwahl eingesetzt werden) und ggf. die Tasten T5, T6 am Handgriff 7. Die entsprechenden Aufnahmeparameter bzw. -modi werden im Kameradisplay 10 angezeigt. Es ist jedoch auch möglich, über z.B. die Taste T5 und/oder T6, wenn einer der Wahlschalter W3, W4, W6 in seiner Auswahlstellung steht, das entsprechende Menü auszuwählen.

Die drei Wahlschalter W3, W4 und W6 sind jeweils als mechanischer Schalter ausgebildet, die in verschiedene Schalterstellungen bringbar sind. So weist der erste Wahlschalter W3 vier Schalterstellungen W3₁, W3₂, W3₃ und W3₄ auf. Wenn der Schalter W3 sich in der Schalterstellung W3₁ befindet, ist die Kamera ausgeschaltet. In der Schalterstellung W3₂ ist der Einzelbild-Aufnahmemodus aktiviert. In der Schalterstellung W3₃ ist der Serienbild-Aufnahmemodus eingestellt. Die Schalterstellung W3₁ ist mit dem Text "OFF" gekennzeichnet und die Schalterstellungen W3₂ und W3₃ sind mit Symbolen gekennzeichnet, so daß ein Bediener der Kamera mit einem Blick auf den Wahlschalter W3 sofort feststellen kann, welcher Auslösemodus momentan eingestellt ist.

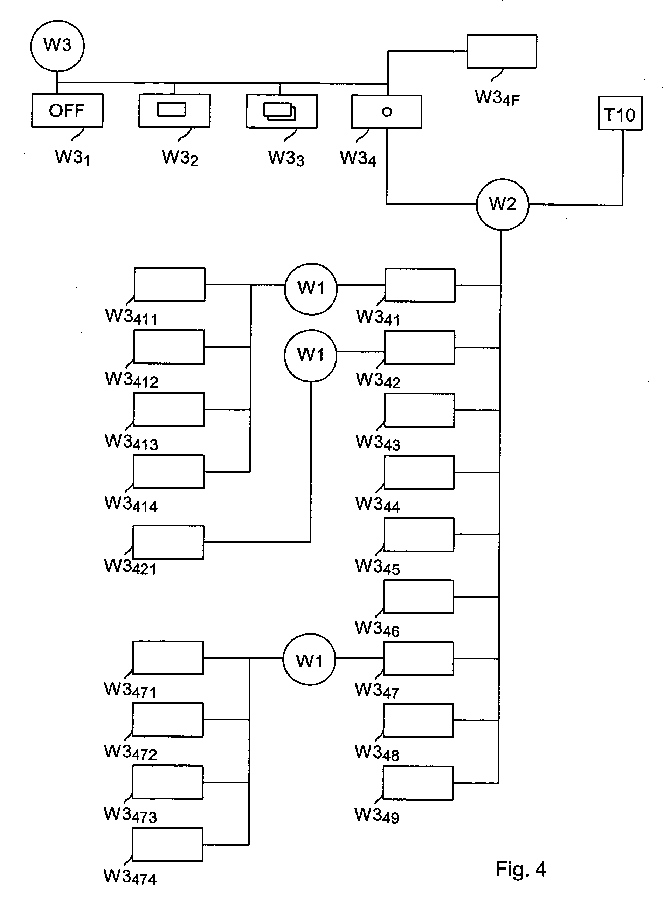

Die Schalterstellung W3₄ (Auswahlmodusstellung), in der sich der Schalter W3 bei der Darstellung in Fig. 1 befindet, betrifft den Auswahlmodus bzw. erweiterten Einstellmodus. Wenn der erste Wahlschalter W3 in der Schalterstellung W3₄ steht und die erste Taste T10 gedrückt und gehalten wird, ist die Kamera 1 im Auswahlmodus und werden auf der Anzeige 10 des Handgriffes 7 weitere auswählbare Auslösemodi angezeigt. In der schematischen Menüdarstellung von Fig. 4 sind neun verschiedene Auslösemodi W3₄₁ bis W3₄₉ angedeutet, die mittels dem Wahlrad W2 ausgewählt werden können. Bei Auswahl der Auslösemodi W3₄₁, W3₄₂ und W₄₇ sind weitere Optionen mittels dem Wahlrad W1 auswählbar.

So betrifft der Auslösemodus W3₄₁ die Erstellung einer Belichtungsreihe, bei der die Blende variiert werden kann. Mittels dem Wahlrad W1 kann dann eine von vier vorbestimmten Belichtungsreihen ausgewählt werden.

Bei der Belichtungsreihe W3₄₁₁ werden drei Auslösungen durchgeführt, wobei die Blende einmal unverändert ist, einmal um -1/3 Belichtungswertstufen und einmal um +1/3 Belichtungswertstufen verändert ist.

Auch bei den Belichtungsreihen W3₄₁₂ und W3₄₁₃ werden drei Auslösungen durchgeführt, wobei die Blende jeweils einmal unverändert ist sowie bei der Belichtungsreihe W3₄₁₂ um ± 2/3 Belichtungswertstufen und bei der Belichtungsreihe W3₄₁₃ um ± 1 Belichtungswertstufe verändert wird.

Bei der Belichtungsreihe W3₄₁₄ werden fünf Auslösungen durchgeführt. Eine Auslösung ohne Änderung der voreingestellten Blende, zwei Auslösungen mit einer Änderung der Blende um +/-1/3 Belichtungswertstufen und zwei Auslösungen mit der Änderung der Blende von ± 2/3 Belichtungswertstufen.

Der Auslösungsmodus W3₄₂ ist ein Selbstauslösemodus. Mittels dem Wahlrad W1 kann dann im Menüpunkt W3₄₂₁ die Verzögerung bis zur Selbstauslösung beispielsweise von 0,25 s bis 128 s in vorbestimmten Schritten eingestellt werden.

Der Auslösemodus W3₄₃ betrifft eine sehr schnelle Auslösung. Bei diesem Auslösemodus sind keine weiteren Einstellmöglichkeiten gegeben, so daß in Fig. 4 auch keine Einstellungen für das Wahlrad W1 dargestellt sind. Gleiches gilt für die Auslösemodi W3₄₄ - W3₄₆, W3₄₈ und W3₄₉, wobei der Modus W3₄₄ z.B. ein Mehrfachbelichtungsmodus ist.

Bei dem Auslösemodus W3₄₇ handelt es sich um eine Belichtungsreihe, bei der der Fokus variiert wird. Über den Wahlschalter W1 kann dabei eingestellt werden, ob 3, 5, 7 oder 9 Auslösungen (W3₄₇₁, W3₄₇₂, W3₄₇₃, W3₄₇₄) durchgeführt werden.

Ferner ist es möglich, daß über das Wahlrad W2 auch die Auslösemodi W3₂ und W3₃ eingestellt werden. So entspricht hier der Auslösemodi W3₄₈ dem Auslösemodus W3₂ und der Auslösemodus W3₄₉ dem Auslösemodus W3₃.

Wie bereits beschrieben wurde, muß der Bediener für diese Auswahl die Taste T10 gedrückt halten und gleichzeitig über das Wahlrad W2 und gegebenenfalls das Wahlrad W1 den gewünschten Auslösemodus einstellen. Sobald der Bediener die Taste T10 losläßt, ist der soeben mit dem Wahlrad W2 und gegebenenfalls dem Wahlrad W1 ausgewählte Auslösemodus eingestellt.

Dieser im Auswahlmodus der Kamera 1 eingestellte Auslösemodus wird so lang beibehalten, bis entweder mittels dem ersten Wahlschalter W3 der Auslösemodus geändert wird oder durch Drücken der ersten Taste T10 und dem Wahlrad W2 und gegebenenfalls dem Wahlrad W1 ein anderer Auslösemodus ausgewählt wird.

Wenn die Taste T10 nicht gedrückt wird, kann mittels dem ersten Wahlrad W1 die gewünschte Blende und mit dem Wahlrad W2 die gewünschte Belichtungszeit eingestellt werden, wobei die ausgewählte Blende und die ausgewählte Belichtungszeit in der Regel über die Anzeige 10 dem Benutzer angezeigt werden. Da das Wahlrad W1 mit dem Zeigefinger und das Wahlrad W2 mit dem Daumen der Hand, die den Handgriff 7 festhält, bedient werden können, ist eine schnelle Wahl des gewünschten Belichtungsmodus möglich, ohne daß der Benutzer umständlich umgreifen müßte.

Wenn der erste Wahlschalter W3 von einer der Stellungen W3₁ bis W3₃ in die Stellung W3₄ gebracht wird und die Taste T10 nicht gedrückt wird, kann der Auslösemodus beispielsweise über einen mit der Kamera 1 verbundenen Computer (nicht gezeigt) ferngesteuert werden (Modus W3_{4F}). Auch in diesem Fall befindet sich die Kamera 1 im Auswahlmodus. Zur Verbindung weist die Kamera 1 einen entsprechenden Anschluß auf. Dabei kann es sich beispielsweise um eine bekannte Schnittstelle handeln, wie z.B. eine USB- oder FireWire-Schnittstelle, die an der ersten oder zweiten Seitenwand 6, 11 des Kameragehäuses 2, an dem Handgriff 7 oder an einer sonstigen Position der Kamera vorgesehen sein kann.

Mit dem zweiten Wahlschalter W4 kann der Belichtungsmodus eingestellt werden. Vorgegebene Belichtungsmodi sind der sogenannte Programmodus P (Schalterstellung W4₁), bei dem sowohl Blende als auch Belichtungszeit automatisch optimal angepaßt werden, der Belichtungsmodus S (Schalterstellung W4₂), bei dem die mittels dem Wahlrad W2 ausgewählte Belichtungszeit, wenn möglich, beibehalten und die Blende entsprechend gewählt wird, der Belichtungsmodus A (Schalterstellung W4₃), bei dem die mittels dem Wahlrad W1 voreingestellte Blende, wenn möglich, beibehalten und die Belichtungszeit entsprechend angepaßt wird, und der Belichtungsmodus M (Schalterstellung W4₄), in dem der Benutzer sowohl Blende als auch Belichtungszeit mittels den Wahlrädern W1 und W2 manuell einstellen kann.

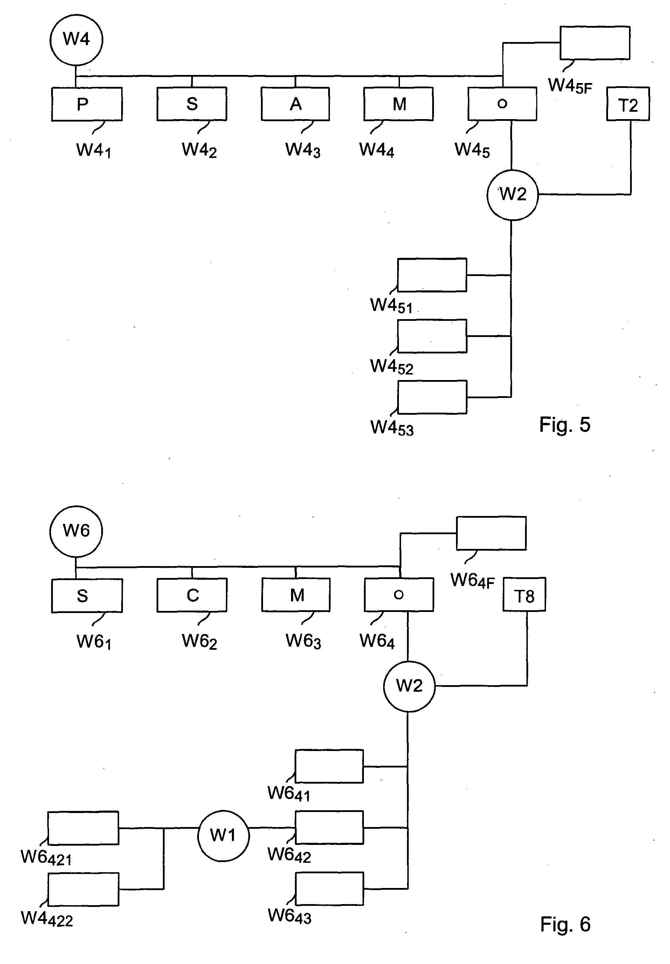

In der Schalterstellung W4₅ (Auswahlmodusstellung) können bei gleichzeitigem Drücken der zweiten Taste T2 weitere Belichtungsmodi eingestellt werden, die über die Anzeige 10 dem Benutzer angeboten werden. Die Auswahl erfolgt über das Wahlrad W2 in der oben beschriebenen Weise. In Fig. 5 sind schematisch drei weitere Belichtungsmodi dargestellt. Dabei kann es sich beispielsweise um einen Belichtungsmodus für Nachtaufnahmen (W4₅₁), einen Belichtungsmodus für Gegenlichtaufnahmen (W4₅₂) und einen Porträtmodus (W4₅₃) handeln.

Natürlich ist es möglich, weitere Belichtungsmodi vorzusehen, die über das Wahlrad W2 und eventuell über das Wahlrad W1, falls Untermodi der ausgewählten Belichtungsmodi einzustellen sind, ausgewählt werden können.

Wenn der Schalter W4 von einer der Schalterstellungen W4₁ bis W4₄ in die Schalterstellung W4₅ gebracht wird und die Taste T2 nicht gedrückt wird, ist eine Fernsteuerung des Belichtungsmodus über einen mit der Kamera verbundenen Computer (nicht gezeigt) möglich (Modus W4_{5F}).

Mit dem dritten Wahlschalter W6 kann der gewünschte Autofokusmodus ausgewählt werden, wobei ein Single-Autofokus (W6₁), ein Continuous-Autofokus (W6₂) oder der manuelle Autofokus (W6₃), bei dem der Benutzer am Objektiv den Fokus einstellt, ausgewählt werden kann. Beim Single-Autofokus wird der Autofokuswert gespeichert, der bei Drücken der Auslösetaste T1 bis zu ihrem ersten Druckpunkt vorliegt, sofern die Auslösetaste T1 weiter beim ersten Druckpunkt gedrückt gehalten wird. Wenn die Auslösetaste T1 weiter bis zu ihrem zweiten Druckpunkt gedrückt wird, erfolgt die Aufnahme, wobei der gespeicherte Autofokuswert verwendet wird, selbst wenn sich die aufzunehmende Szene verändert hat. Beim Continuous-Autofokuswert wird kontinuierlich der Autofokuswert ermittelt und wird der Wert verwendet, der bei Drücken der Auslösetaste T1 bis zum zweiten Druckpunkt gerade ermittelt wurde.

Wenn der dritte Wahlschalter W6 in die Schalterstellung W6₄ (Auswahlmodusstellung) gebracht wird und die Taste T9 nicht gedrückt wird, ist eine Fernsteuerung des Fokus über einen mit der Kamera 1 verbundenen Computer (nicht gezeigt) möglich (Modus W6_{4F}). Wenn die Taste T9 gedrückt wird, kann in der gleichen Weise, wie oben in Verbindung mit dem ersten und zweiten Wahlschalter W3 und W4 beschrieben wurde, über die Anzeige 10 und das Wahlrad W2 und gegebenenfalls das Wahlrad W1 ein weiterer Autofokusmodus (W6₄₁, W6₄₂, W6₄₂₁, W6₄₂₂, W6₄₃) ausgewählt werden, wie dies in dem schematischen Diagramm von Fig. 6 dargestellt ist.

Auf der zweiten Seitenwand 11 ist ferner ein vierter Wahlschalter W7 sowie eine dem vierten Wahlschalter W7 zugeordnete vierte Taste T7 angeordnet. Mit dem vierten Wahlschalter W7 kann der Dauerlicht-Meßmodus eingestellt werden, wobei der vierte Wahlschalter W7 vier Schalterstellungen W7₁, W7₂, W7₃ sowie W7₄ aufweist.

Wenn der vierte Wahlschalter W7 in der Schalterstellung W7₁ steht, wird über die gesamte Bildfläche gemessen. In der Schalterstellung W7₂ wird die Mitte der Bildfläche stärker gewichtet. In der Schalterstellung W7₃ wird nur in der Mitte der Bildfläche bzw. des aufzunehmenden Bildes gemessen. Die Schalterstellungen W7₁ - W7₃ entsprechen dem Normalmodus der Kamera 1.

Wenn der Auswahlschalter W7 in der Schalterstellung W7₄ steht, befindet sich die Kamera 1 im Auswahlmodus. Die Kamera 1 ist so ausgelegt, daß sie dann über einen Computer (nicht gezeigt), der mit der Kamera 1 verbunden ist, hinsichtlich des Dauerlicht-Meßmodus ferngesteuert werden kann.

Bei den Schalterstellungen W7₁ - W7₃ kann der Bediener der Kamera über das Wahlrad W1 die ISO-Einstellung (beispielsweise im Bereich von ISO 25 ... 400) auswählen, wenn gleichzeitig die Taste T7 gedrückt wird. Über das Wahlrad W2 kann bei gleichzeitig gedrückter Taste T7 der eingestellte ISO-Wert im Bereich von ± 5 Belichtungswertstufen verändert werden. Natürlich ist es auch möglich, die Funktionen der Wahlräder W1 und W2 für die Änderung der Belichtung zu vertauschen, so daß bei gedrückter Taste T7 die ISO-Einstellung mittels des Wahlrades W2 durchgeführt wird und die Änderung der ISO-Einstellung im Bereich von ± 5 Belichtungswertstufen mittels dem Wahlrad W1 erfolgt.

An der linken Seitenwand 11 ist ferner ein Blitzschuh 13 sowie eine dem Blitzschuh 13 zugeordnete fünfte Taste T8 angeordnet. Bei Drücken der Taste T8 gelangt die Kamera in den Auswahlmodus, wobei über das Wahlrad W1 eingestellt werden kann, daß der Blitz ausgeschaltet wird, daß der Blitz früh oder spät erfolgt. Über das Wahlrad W2 kann bei gedrückter Taste T8 eine Feineinstellung für den Blitzmodus erfolgen.

Die Auslösetaste T1 der Kamera 1 weist zwei Druckpunkte auf, wobei bei Drücken der Taste T1 bis zum ersten Druckpunkt die Elektronik der Kamera eingeschaltet, die Belichtungssteuerung und die Autofokussierung durchgeführt werden. Bei einem weiteren Drücken der Auslösetaste T1 bis zum zweiten Druckpunkt erfolgt dann die Aufnahme gemäß den eingestellten Aufnahmeparametern.

Die Tasten T2 und T9 weisen im Normalmodus noch eine zusätzliche Funktionalität auf. Wenn die Taste T2 im Normalmodus gedrückt wird, wird die bei Drücken der Taste T2 gerade durchgeführte Belichtungsmessung gespeichert und bei Durchführung einer Aufnahme durch Drücken der Taste T1 angewendet. In gleicher Weise wird durch Drücken der Taste T9 die gerade vorliegende Fokussierung gespeichert und bei Drücken der Taste T1 angewendet.

Die Tasten T5 und T6 auf dem Handgriff 7 sind sogenannte Soft-Key-Tasten. Die Funktion dieser Tasten ändert sich gemäß den gerade dargestellten Optionen auf der Anzeige 10. Dadurch kann die Bedienung der Kamera vereinfacht werden.

Mit der Taste T4 kann eine Spiegelvorauslösung durchgeführt werden und mit der Taste T3 kann die Schärfentiefe kontrolliert werden.

Die Anzeige 10 bildet zusammen mit dem Wahlrad W2 ein Display- und Vorwahlmodul. Das Auswahlrad W1 kann ebenfalls Bestandteil des Display- und Vorwahlmoduls sein.

Das Display- und Vorwahlmodul bildet zusammen mit dem Einstellmodul 12 eine Bedienungseinheit für eine Kamera, insbesondere eine Fotokamera. Bei der Kamera kann es sich um eine einäugige Spiegelreflexkamera und insbesondere um eine Mittelformatkamera handeln.

Bei der erfindungsgemäßen Kamera kann ein Bediener mit einer Hand (hier der rechten Hand) die Kamera 1 halten, die Blenden- und Zeitvorwahl mittels der Wahlräder W1 und W2 durchführen und die Vorauslösung durch Drücken der Taste T1 bewirken, während die andere Hand (hier linke Hand) zeitgleich Modifizierungen mittels dem Einstellmodul 12 durchführen kann.

Natürlich kann die erfindungsgemäße Kamera auch für Linkshänder ausgebildet werden. In diesem Fall wird der Handgriff 7 an der linken Seitenwand 11 drehbar befestigt und wird das Einstellmodul 12 an der rechten Seitenwand 6 des Kameragehäuses 2 angeordnet. Der Handgriff 7 ist dann bevorzugt gespiegelt zu dem in den Fig. 1 bis 3 gezeigten Handgriff 7 ausgebildet.

Die Kamera 1 kann alternativ so ausgebildet sein, daß die Funktionen der Wahlräder W1 und W2 vertauscht sind.

Auch ist es möglich, die Kamera so abzuwandeln, daß man durch Drücken und anschließendem Loslassen der Taste T10, T7, T9 in den Auswahlmodus gelangt, sofern der zugeordnete Wahlschalter W3, W4, W6 in der Auswahlmodusstellung steht. Die Auswahl der Aufnahmeparameter erfolgt in der beschriebenen Weise mittels dem Wahlrad W2 und ggf. dem Wahlrad W1, wobei während dieser Auswahl die Taste T10, T7, T9 nicht gedrückt ist. Die Bestätigung der Auswahl kann z.B. durch erneutes Drücken der Taste T10, T7, T9 erfolgen. Es ist zusätzlich oder alternativ möglich, die Bestätigung durch Drücken der Soft-Key-Taste T5 oder T6 durchzuführen.

Ferner kann die Kamera so ausgebildet sein, daß man durch Drücken der Soft-Key-Taste T5 oder T6 in den Auswahlmodus gelangt, sofern zumindest einer der Auswahlschalter W3, W4, W6 in seiner Auswahlmodusstellung steht. Die Menüführung kann dann so angepaßt sein, daß nur die Menüs angezeigt werden, die Aufnahmeparameter der Auswahlschalter W3, W4, W6 betreffen, die gerade in ihrer Auswahlmodusstellung stehen.

## Patentansprüche

1. Fotokamera mit einem Gehäuse (2), einem an einer ersten Seitenwand (6) des Gehäuses (2) positionierten Handgriff (7) und einer Bedienungseinheit, die
an einer der ersten Seitenwand (6) gegenüberliegenden Seitenwand (11) des Gehäuses (2) ein Einstellmodul (12) mit mehreren Wahlschaltern (W3, W4, W6), die jeweils mechanisch in verschiedene Stellungen gebracht werden können, um jeweils einen dem entsprechenden Wahlschalter zugeordneten Aufnahmeparameter einzustellen, und am Handgriff (7) einen Auslösemechanismus (T1), eine Anzeige (10) sowie ein erstes Einstellelement (W1, W2) aufweist,
wobei jeder Wahlschalter (W3, W4, W6) des Einstellmoduls (12) in eine zusätzliche Stellung gebracht werden kann, bei der für den Aufnahmeparameter des Wahlschalters (W3, W4, W6) in einem Auswahlmodus weitere einstellbare Werte in der Anzeige (10) dargestellt werden, die mittels des ersten Einstellelements (W1, W2) auswählbar sind.

2. Kamera nach Anspruch 1, bei der das Einstellmodul (12) für jeden Wahlschalter (W3, W4, W6) eine Taste (T10, T2, T9) aufweist, die bei Betätigung, wenn der zugeordnete Wahlschalter (W3, W4, W6) in der zusätzlichen Stellung steht, die Kamera in den Auswahlmodus schaltet.

3. Kamera nach Anspruch 2, bei der bei Betätigung der Taste (T10, T2, T9) die Kamera in den Auswahlmodus geschaltet und gleichzeitig in der Anzeige (10) die weiteren Werte für den Aufnahmeparameter des Wahlschalters (W3, W4, W6) angezeigt werden, dem die Taste (T10, T2, T9) zugeordnet ist.

4. Kamera nach einem der obigen Ansprüche, bei der dem ersten Einstellelement (W1, W2) ein Aufnahmeparameter zugeordnet ist, der mittels dem ersten Einstellelement (W1, W2) einstellbar ist, wenn die Kamera nicht im Auswahlmodus ist.

5. Kamera nach einem der obigen Ansprüche, bei der im Auswahlmodus die Auswahl der Aufnahmeparameter der Wahlschalter (W3, W4, W6) menügeführt durchführbar ist.

6. Kamera nach einem der obigen Ansprüche, bei der das erste Einstellelement als Wahlrad ausgebildet ist.

7. Kamera nach einem der obigen Ansprüche, bei der die Bedienungseinheit am Handgriff ein zweites Einstellelement (W1, W2) zur Auswahl im Auswahlmodus aufweist, wobei das zweite Einstellelement bevorzugt als Wahlrad ausgebildet ist.

8. Kamera nach einem der obigen Ansprüche, bei der zumindest ein Wahlschalter (W3) als Drehschalter ausgebildet ist, wobei bevorzugt die dem zumindest einen Wahlschalter (W3) zugeordnete Taste (T10) vom Wahlschalter (W3) umgeben ist.

9. Kamera nach einem der obigen Ansprüche, bei der der Handgriff (7) drehbar am Gehäuse (2) befestigt ist.

10. Kamera nach einem der obigen Ansprüche, bei der der Auslösemechanismus (T1) und das erste Einstellelement (W1) an der Unterseite (8) des Handgriffs (7) und die Anzeige (10) an der Oberseite (9) des Handgriffs (7) angeordnet ist.

11. Bedienungsverfahren für eine Fotokamera mit mehreren Wahlschaltern, die jeweils mechanisch in verschiedene Stellungen gebracht werden können, um in einem Normalmodus jeweils einen dem entsprechenden Wahlschalter zugeordneten Aufnahmeparameter einzustellen, und bei dem jeder Wahlschalter in eine zusätzliche Stellung gebracht werden kann, bei der für den Aufnahmeparameter des Wahlschalters in einem Auswahlmodus weitere einstellbare Werte in einer Anzeige dargestellt werden, die auswählbar sind.

12. Verfahren nach Anspruch 11, bei dem das Auswählen der weiteren einstellbaren Werte im Auswahlmodus menügeführt erfolgt.
